# FASCICULE DE BREVET EUROPEEN

(11) **EP 2 614 347 B1**
(45) Date de publication et mention de la délivrance du brevet: **25.01.2017**
(21) Numéro de dépôt: 11761646.6
(22) Date de dépôt: 05.09.2011
(51) Int. Cl.: G01M 3/16, G01M 3/18, G21C 17/00

(54) **DISPOSITIF DE DÉTECTION DE FUITE ET REVÊTEMENT D'ORGANE DE TRANSPORT OU DE STOCKAGE DE FLUIDE COMPORTANT CE DISPOSITIF DE DÉTECTION**
LECKDETEKTOR SOWIE BESCHICHTUNG FÜR EIN FLÜSSIGKEITSTRANSPORT- ODER SPEICHERELEMENT MIT DIESEM DETEKTOR
LEAK DETECTION DEVICE, AND COATING INTENDED FOR A FLUID TRANSPORT OR STORAGE MEMBER AND COMPRISING SAID DETECTION DEVICE

(30) Priorité: 08.09.2010 FR 1003573
(43) Date de publication de la demande: 17.07.2013
(73) Titulaire: Commissariat à l'Énergie Atomique et aux Énergies Alternatives, 75015 Paris (FR)
(72) Inventeur: ALBALADEJO, Serge, F-13530 Trets (FR); ZANOLIN, Rémi, F-13009 Marseille (FR)
(74) Mandataire: Marchand, André
(86) Numéro de dépôt international: PCT/FR2011/000488
(87) Numéro de publication internationale: WO 2012/032233

(56) Documents cités:
- EP-A1- 0 093 025
- EP-A1- 1 128 113
- WO-A1-2007/087720
- FR-A5- 2 155 534
- JP-A- 6 101 399
- US-A1- 2003 094 033
- US-A1- 2008 053 198
- US-B1- 6 498 496

## Description

### DOMAINE TECHNIQUE

La présente invention est relative à un dispositif pour la détection de fuite et à un revêtement d'un organe de transport ou de stockage de fluide pour ce dispositif de détection.

L'invention est également relative à un organe de transport ou de stockage de fluide équipé d'un tel revêtement, à un procédé de revêtement d'un organe de transport ou de stockage de fluide, ainsi qu'à un procédé de contrôle du bon fonctionnement d'un tel dispositif de détection de fuite.

L'invention s'applique en particulier au revêtement de conduits de transport de sodium liquide et de conteneurs de stockage de sodium faisant partie d'un circuit de refroidissement d'un réacteur nucléaire.

Dans la suite de la présente demande, sauf indication explicite ou implicite contraire, le terme « conduit » est utilisé pour désigner aussi bien un conduit de transport de fluide qu'un conteneur de stockage de fluide ou qu'un accessoire - tel qu'une vanne - équipant un tel conduit ou conteneur.

### ETAT DE LA TECHNIQUE

En particulier dans le cas des conduits de transport de sodium, il est important de pouvoir contrôler automatiquement et à distance, l'apparition d'une fuite.

A cet effet, il a été proposé dans les brevets FR-A-2155534 et FR-A-2455707, des dispositifs de détection d'une fuite de sodium au travers de la paroi d'un conduit, par détection d'un contact électrique entre la paroi du conduit et un élément électriquement conducteur séparé de cette paroi par un élément isolant.

Le dispositif décrit dans FR-A-2455707 comporte une coquille rigide et isolante réalisée dans un matériau comprenant des fibres noyées dans un liant. La coquille comporte des rainures recevant des fils ou rubans métalliques et maintenant les fils ou rubans espacés de la paroi du conduit.

Un inconvénient de ce dispositif résulte de la difficulté de réaliser une coquille - ou demi coquille - épousant parfaitement la surface externe du conduit auquel elle est destinée, en particulier lorsque cette surface externe présente une forme complexe.

Le dispositif décrit dans FR-A-2155534 comporte une feuille isolante formée de fibres réfractaires, qui peut être enroulée autour d'un conduit métallique, et une grille ou toile métallique enroulée autour de la feuille isolante et en contact serré avec la feuille isolante.

Un inconvénient de ce dispositif résulte de la difficulté de conformer la grille ou toile de façon à ce qu'elle épouse intimement la feuille isolante, sans qu'une portion de la grille ou toile ne pénètre à l'intérieur de la feuille isolante, et sans qu'un contact soit ainsi involontairement établi entre la grille ou toile et la paroi - généralement métallique - du conduit.

Les fils, rubans, grilles, et toiles métalliques risquent en outre de s'oxyder. Dans ce cas, la formation d'une pellicule d'oxyde à la surface d'un tel élément conducteur métallique, peut entraver ou retarder la détection d'un court-circuit entre cet élément et la paroi du conduit, et peut par conséquent entraver ou retarder la détection d'une fuite.

Par ailleurs, de tels éléments conducteurs métalliques peuvent se déformer par dilatation thermique, lors de variations de la température du conduit, ce qui peut également provoquer un disfonctionnement du système de détection de fuite.

### EXPOSÉ DE L'INVENTION

Un objectif de l'invention est de proposer un dispositif de détection de fuite d'un fluide circulant dans un conduit ou stocké dans un conteneur, un dispositif de revêtement du conduit ou conteneur pour ce dispositif de détection, un organe de transport ou de stockage de fluide équipé d'un tel revêtement, un procédé de revêtement d'un organe de transport ou de stockage de fluide, ainsi qu'un procédé de contrôle du bon fonctionnement d'un tel dispositif de détection de fuite, qui soient améliorés et/ou qui remédient, en partie au moins, aux lacunes ou inconvénients des procédés et dispositifs connus.

Un objectif de l'invention est de proposer un dispositif de détection de fuite de sodium liquide sous pression dont la température peut être située dans une plage allant de 100 °C (degré Celcius) environ à 600 °C environ, un dispositif de revêtement d'un conduit incluant ce dispositif de détection, un organe de transport ou de stockage de ce fluide équipé d'un tel revêtement, un procédé de revêtement d'un organe de transport ou de stockage de ce fluide, ainsi qu'un procédé de contrôle du bon fonctionnement d'un tel dispositif de détection de fuite.

Selon un aspect de l'invention, il est proposé un dispositif de détection de fuite d'un fluide stocké ou transporté dans un conduit électriquement conducteur, qui est agencé pour entourer -ou envelopper- le conduit. Le dispositif de détection comporte une couche d'un matériau isolant fibreux et une couche d'un matériau conducteur fibreux (ou filamenteux) qui s'étend sur/contre la couche de matériau isolant fibreux, le matériau conducteur fibreux étant essentiellement constitué d'un feutre de carbone ou de graphite, et un appareil de détection de court-circuit ou de mesure d'impédance entre la paroi du conduit et la couche de matériau conducteur.

Grâce à sa cohésion notamment, ce matériau conducteur permet d'éviter des courts circuits intempestifs entre ce matériau et le conduit électriquement conducteur, tout en facilitant des courts circuits intentionnels réalisés comme décrit ci après pour le contrôle du bon fonctionnement du dispositif de détection de fuite. Selon un mode de réalisation, le matériau isolant est une laine de fibres minérales, en particulier une laine de fibres tissées ou torsadées essentiellement constituées de silice et d'oxyde de magnésium ou de calcium.

Le matériau conducteur fibreux peut comporter une ou plusieurs couches de feutre souple essentiellement constitué de fibres agglomérées de carbone ou de graphite.

La surveillance de l'impédance, mesurée entre la couche du matériau conducteur fibreux et la paroi du conduit, permet de détecter la présence d'un fluide conducteur ayant traversé la couche de matériau isolant fibreux, lors d'une fuite de ce fluide au travers de la paroi du conduit.

Un tel matériau conducteur fibreux est peu sensible à l'oxydation et sa capacité de conduction électrique est peu affectée par son éventuelle oxydation.

Par ailleurs, la souplesse de ce matériau lui permet de s'adapter aux déformations des appareils/organes qu'il entoure, en particulier les déformations engendrées par la dilatation thermique des appareils.

La souplesse de ce matériau conducteur facilite sa mise en place autour d'un conduit préalablement revêtu du matériau isolant, et permet d'éviter, lorsqu'il est mis en contact intime avec - et pressé contre - la couche de matériau isolant, la mise en contact accidentelle du matériau conducteur fibreux avec la paroi du conduit.

Par ailleurs, le matériau conducteur fibreux contribue à l'isolation thermique du conduit, ce qui permet de limiter les pertes thermiques du fluide circulant - ou stocké - dans le conduit, et de protéger un opérateur du risque de brûlure.

Le dispositif peut comporter des premiers liens, en particulier des liens filiformes ou en forme de cordelettes, servant à solidariser la couche de matériau isolant à un conduit, par cerclage par exemple.

Le dispositif peut comporter des seconds liens, en particulier des liens filiformes ou en forme de cordelettes, servant à solidariser la couche de matériau conducteur fibreux au conduit revêtu du matériau isolant, par cerclage également par exemple.

Les premiers et seconds liens peuvent être essentiellement constitués de fibres d'un matériau électriquement isolant, qui peut être identique ou similaire à celui constituant la couche de revêtement isolante.

De tels liens permettent de revêtir simplement la paroi externe d'un conduit de forme complexe, en découpant un lien de longueur adaptée, en entourant la couche considérée par ce lien conformé en boucle ou anneau, et en fermant cette boucle par un noeud réalisé avec les deux extrémités libres du lien, ou bien à l'aide d'un dispositif adapté - tel qu'un serre câble - .

Le dispositif de détection comporte généralement un premier organe - tel qu'une borne - de raccordement qui est agencé pour faciliter le raccordement électrique de la couche électriquement conductrice à un appareil de détection électrique ou électronique tel qu'un impédancemètre.

Cet organe de raccordement peut comporter un élément de contact, en forme de tige ou de barreau, qui peut être inséré ou enfoui, en partie au moins, dans la couche conductrice fibreuse. Dans ce cas notamment, l'élément de contact peut être réalisé, en partie au moins, en graphite ou en carbone, et présente une forme et des dimensions adaptées à l'épaisseur et à la structure filamentaire agglomérée de la couche conductrice.

Alternativement, l'organe de raccordement peut comporter un élément de contact en forme de pince dont les mors peuvent enserrer une portion de la couche conductrice fibreuse.

Le dispositif de détection comporte aussi généralement, outre l'appareil de détection de court-circuit ou de mesure d'impédance, un second organe - tel qu'une borne - de raccordement qui est en contact avec la paroi du conduit.

Selon un autre aspect de l'invention, il est proposé un dispositif de revêtement d'un conduit qui comporte :
- une première couche électriquement isolante essentiellement constituée de fibres, qui s'étend contre la surface externe du conduit ;
- une seconde couche électriquement conductrice essentiellement constituée de fibres agglomérées de carbone ou de graphite, qui s'étend contre la surface externe de la première couche ; et
- une troisième couche thermiquement isolante essentiellement constituée de fibres, qui s'étend contre la surface externe de la seconde couche.

Le dispositif de revêtement peut en outre comporter une paroi rigide agencée pour entourer ou envelopper la troisième couche thermiquement isolante.

Cette paroi rigide peut comporter deux portions - ou demi coques - et des moyens de liaison pour assembler ces deux portions.

Cette paroi rigide peut être percée d'au moins un orifice permettant le passage d'une pièce servant à contrôler le bon fonctionnement du dispositif de détection de fuite, au travers de cette paroi et des couches du revêtement du conduit.

Selon un autre aspect de l'invention, il est proposé un conduit de transport ou un conteneur de stockage d'un fluide caloporteur faisant partie d'un réacteur, qui est équipé d'un tel dispositif de détection de fuite du fluide caloporteur, ou qui est revêtu d'un tel dispositif de revêtement.

Selon un autre aspect de l'invention, il est proposé un procédé de contrôle du bon fonctionnement d'un dispositif de détection de fuite équipant un conduit et comportant une couche de matériau isolant fibreux recouverte d'une couche d'un matériau conducteur fibreux, dans lequel on provoque un court circuit entre la paroi du conduit et la couche de matériau conducteur fibreux.

Selon un mode préféré de réalisation de ce procédé, on introduit à cet effet une pièce électriquement conductrice au travers de la couche de matériau conducteur et au travers de la couche de matériau isolant, et on met en contact la pièce conductrice avec la paroi (conductrice) du conduit tout en maintenant cette pièce en contact avec la couche de matériau conducteur au travers de laquelle la pièce s'étend, afin de réaliser le court-circuit et contrôler, par la mesure de l'impédance entre la paroi du conduit et la couche de matériau conducteur, le bon fonctionnement du système de détection de fuite par impédancemétrie.

Cette pièce électriquement conductrice peut être métallique, en forme de tige ou d'aiguille notamment.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est une vue en coupe longitudinale schématique d'un conduit revêtu d'une couche d'un matériau isolant fibreux.
La figure 2 est une vue en coupe longitudinale schématique du conduit revêtu de la couche isolante de la figure 1, et recouvert d'une couche de matériau conducteur fibreux.
La figure 3 est une vue en coupe longitudinale schématique du conduit équipé d'un dispositif de détection de la figure 2, qui est en outre recouvert d'une couche de matériau isolant entourée par une paroi rigide.
La figure 4 est une vue en coupe longitudinale schématique illustrant la détection de fuite au travers de la paroi du conduit illustré figure 3.
La figure 5 est une vue en coupe longitudinale schématique illustrant le contrôle du bon fonctionnement du système de détection de fuite illustré figure 4.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

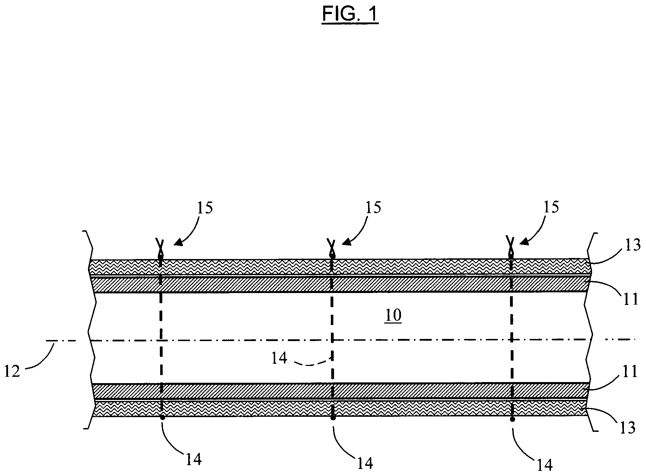

Par référence aux figures 1 à 5, un conduit 10 de transport de sodium liquide sous pression comporte une paroi 11 cylindrique s'étendant selon un axe longitudinal 12. La paroi 11 peut être réalisée en acier inoxydable.

Par référence à la figure 1 notamment, une couche d'un matériau 13 isolant fibreux a été enroulée - ou autrement déposée - autour de la paroi 11 et est maintenue en contact avec la face externe de cette paroi, par des cordelettes 14 encerclant la couche de matériau 13 et nouées (repères 15) pour former des boucles fermées enserrant la couche 13.

Le matériau 13 peut par exemple être une laine de fibres minérales commercialisée sous l'appellation « Superwool 607 Blanket » par la société Thermal Ceramics (USA).

Cette couche de laine minérale peut présenter une épaisseur de l'ordre de 2 millimètres environ, et jusqu'à 5, 10, ou 15 millimètres environ, par exemple.

Il est généralement souhaitable que l'épaisseur de cette couche de matériau 13 soit inférieure à 20 millimètres, afin de limiter le temps mis par le fluide s'échappant du conduit pour imprégner et/ou traverser cette couche de matériau et atteindre la couche de matériau conducteur, afin de limiter ainsi le temps s'écoulant avant que la détection de la fuite puisse intervenir.

D'autres matériaux isolants fibreux peuvent être utilisés pour réaliser la couche 13, en particulier des laines comportant des fibres de silice et d'oxyde de magnésium ou de calcium.

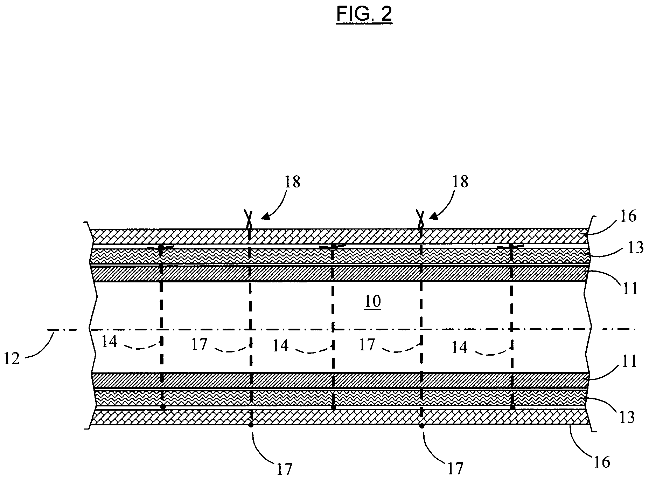

Par référence à la figure 2 notamment, une couche d'un matériau 16 conducteur a été enroulée - ou autrement déposée - autour de la couche de matériau 13 isolant fibreux et est maintenue en contact avec la face externe de cette couche de matériau 13, par des cordelettes 17 encerclant la couche de matériau 16 et nouées (repères 18) pour former des boucles fermées.

Le matériau conducteur 16 peut par exemple être un feutre de graphite commercialisé sous l'appellation « SIGRATHERM® GFA » par la société SGL CARBON GmbH (Allemagne). Un tel feutre de graphite peut être obtenu par graphitisation d'un feutre de carbone.
l'épaisseur de cette couche de feutre peut être de l'ordre de 5 millimètres environ, et peut s'étendre dans une plage allant de 5 millimètres environ jusqu'à 10 millimètres environ au moins, par exemple jusqu'à 20 millimètres environ, 30 millimètres environ, ou 50 millimètres environ.

Il est généralement souhaitable que l'épaisseur de cette couche de matériau 16 soit supérieure ou égale à 5 millimètres, afin d'augmenter l'isolation thermique qu'elle procure, de faciliter son raccordement électrique à un appareil de mesure d'impédance, et de faciliter le contrôle du bon fonctionnement du dispositif de détection comme décrit ci après.

Des feutres de fibres de carbone peuvent être utilisés pour réaliser la couche 16.

Les liens 14 et 17 peuvent par exemple être essentiellement constitués de filaments de silice.

L'épaisseur et la souplesse de chacune des deux couches de matériau fibreux 13 et 16, ainsi que la souplesse des liens maintenant en place ces matériaux, permettent de recouvrir intimement des conduits ou conteneurs de formes et géométries diverses, assurant ainsi une couverture totale des zones d'un circuit de refroidissement contenant un fluide dont une fuite doit être détectée rapidement et de façon fiable.

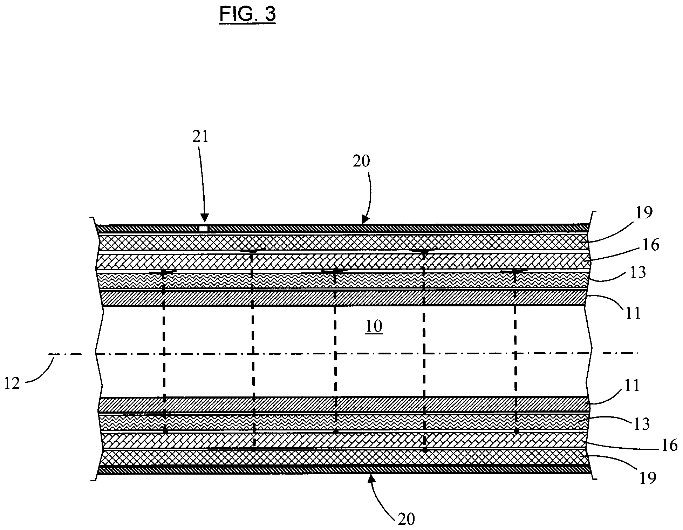

Par référence à la figure 3 notamment, une couche d'un matériau 19 thermiquement isolant a été déposée autour de la couche de matériau 16 conducteur fibreux et est maintenue en contact avec la face externe de cette couche de matériau 16, par une paroi 20 tubulaire s'étendant selon l'axe longitudinal 12 et encerclant la couche de matériau 19.

Le matériau thermiquement isolant 19 peut par exemple être essentiellement constitué d'une laine de verre ou de roche. L'épaisseur de la couche de matériau 19 est généralement supérieure à celle des couches de matériau 13 et 16. Cette épaisseur peut par exemple être de l'ordre de 20 à 50 (ou 100) millimètres environ.

La coque ou paroi rigide 20 assure notamment la protection mécanique des couches de matériau fibreux 13, 16, et 19 qu'elle entoure.

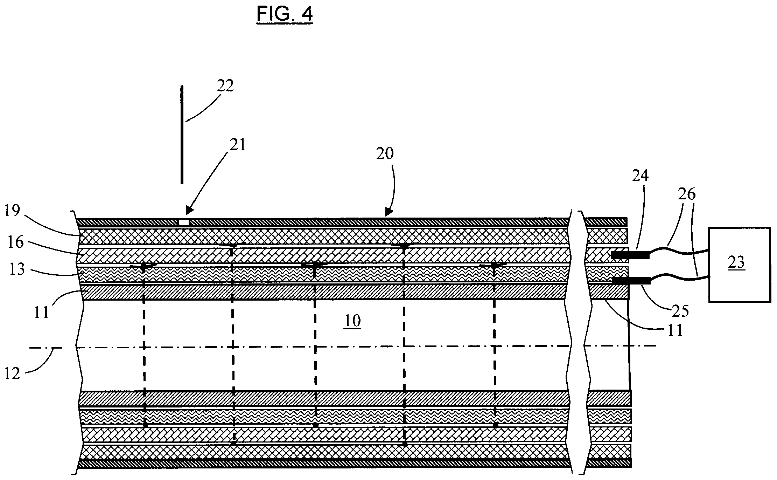

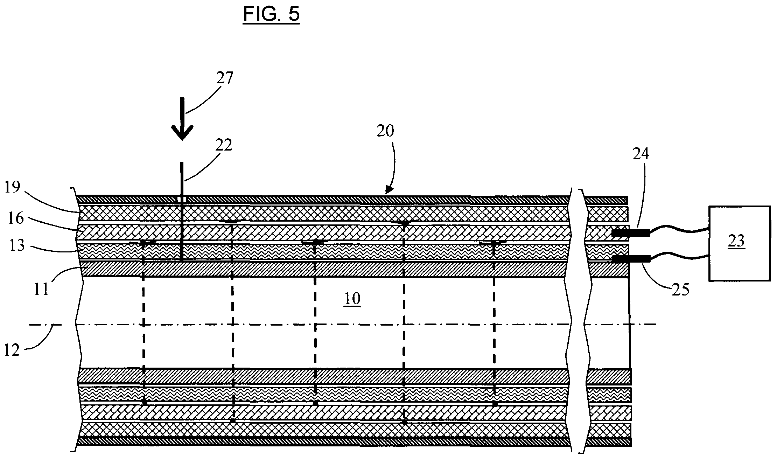

La paroi 20 est percée d'un orifice 21 permettant le passage d'une pièce (repérée 22 figures 4 et 5) servant à contrôler le bon fonctionnement du dispositif de détection de fuite, au travers de cette paroi et des couches 13, 16, et 19 du revêtement du conduit 10.

Par référence à la figure 4 en particulier, la surveillance de l'impédance, mesurée entre la couche du matériau conducteur fibreux 16 et la paroi 11 du conduit 10, permet de détecter la présence d'un fluide conducteur ayant traversé - et imprégnant - la couche de matériau 13 isolant fibreux, lors d'une fuite de ce fluide au travers de la paroi 11 du conduit.

A cet effet, le dispositif de détection de fuite comporte :
- un appareil 23 de détection de court-circuit par mesure d'impédance ;
- un organe 24 pour le raccordement électrique de la couche 16 électriquement conductrice à l'appareil 23 ;
- un organe 25 pour le raccordement électrique de la paroi 11 du conduit à l'appareil 23 ; et
- deux tronçons de fil conducteur 26 reliant respectivement les organes 24, 25 de contact/raccordement, aux bornes de mesure de l'appareil 23.

L'appareil 23 comporte généralement i) un circuit de mesure d'impédance agencé pour délivrer un signal de mesure ; ii) un circuit comparateur raccordé au circuit de mesure pour en recevoir le signal de mesure et agencé pour comparer le signal reçu à un signal ou une donnée déterminé(e), et pour délivrer un signal de comparaison ; et iii) un circuit de commande d'alarme raccordé au circuit comparateur pour en recevoir le signal de comparaison et agencé pour commander le fonctionnement d'une alarme en fonction du signal de comparaison reçu.

L'organe 24 de raccordement illustré figures 4 et 5 est en forme de tige ou barreau de graphite ou de carbone, et est inséré dans l'épaisseur de la couche conductrice filamenteuse 16.

Le second organe 25 de raccordement, qui est en contact électrique avec la paroi du conduit, peut être une pièce métallique soudée au conduit.

Pour le contrôle du bon fonctionnement du dispositif de détection de fuite équipant le conduit 10, on provoque un court circuit entre la paroi 11 du conduit et la couche de matériau 16 conducteur fibreux.

Par référence aux figures 4 et 5, on introduit (selon la flèche 27 figure 5) à cet effet l'aiguille métallique 22 au travers de l'orifice 21 prévu dans la paroi 20, et au travers des couches superposées de matériau 19 thermiquement isolant, de matériau 16 conducteur, et de matériau 13 isolant, jusqu'à mettre en contact l'extrémité longitudinale (inférieure) de l'aiguille conductrice 22 avec la paroi 11 du conduit.

La longueur de l'aiguille étant supérieure à l'épaisseur cumulée des couches des matériaux isolant 13 et conducteur 16, l'aiguille reste maintenue en contact électrique avec la couche de matériau conducteur 16 au travers de laquelle elle s'étend.

L'aiguille 22 réalise ainsi un court-circuit entre la paroi 11 et la couche de matériau 16, ce qui permet de contrôler, par la mesure d'impédance réalisée par l'appareil 23, le bon fonctionnement du système de détection de fuite : l'appareil 23 de mesure doit indiquer la présence d'un court circuit tant que l'aiguille 22 est maintenue en contact avec la paroi 11 et la couche de matériau 16.

Il est à noter que cette opération de contrôle du bon fonctionnement peut être effectuée à n'importe quel moment jugé opportun dans la durée de vie de l'installation, et que cette opération n'engendre aucun dommage au revêtement du conduit, en raison notamment de la structure fibreuse des couches composant ce revêtement.

## Revendications

1. Dispositif de détection de fuite d'un fluide stocké ou transporté dans un conduit (10) comportant une paroi externe (11) électriquement conductrice, qui comporte une couche d'un matériau (13) isolant fibreux agencé pour entourer le conduit, et qui comporte une couche d'un matériau (16) conducteur qui s'étend contre la couche de matériau isolant (13), et un appareil (23) de détection de court-circuit ou de mesure d'impédance entre la paroi (11) du conduit et la couche de matériau (16) conducteur, **caractérisé en ce que** le matériau conducteur est un matériau conducteur fibreux essentiellement constitué d'un feutre de carbone ou de graphite.

2. Dispositif selon la revendication 1 dans lequel le matériau (13) isolant comporte des fibres de silice.

3. Dispositif selon l'une quelconque des revendications 1 ou 2 qui comporte un élément (24) de contact de forme et dimensions adaptées pour être inséré ou enfoui, en partie au moins, dans la couche conductrice fibreuse (16), pour le raccordement électrique de la couche de matériau (16) fibreux à l'appareil (23) de détection.

4. Dispositif selon la revendication 3 dans lequel l'élément (24) de contact est réalisé, en partie au moins, en graphite ou en carbone.

5. Dispositif selon l'une quelconque des revendications 1 ou 2 qui comporte un élément de contact en forme de pince dont les mors peuvent enserrer une portion de la couche conductrice fibreuse (16).

6. Dispositif de revêtement d'un conduit qui comporte un dispositif de détection selon l'une quelconque des revendications 1 à 5 et une couche d'un matériau (19) thermiquement isolant essentiellement constitué de fibres, qui s'étend contre la couche de matériau (16) conducteur fibreux.

7. Dispositif selon la revendication 6 qui comporte en outre une paroi (20) rigide agencée pour entourer ou envelopper la (troisième) couche thermiquement isolante.

8. Dispositif selon la revendication 7 dans lequel la paroi rigide est percée d'au moins un orifice (21) permettant le passage d'une pièce (22) servant à contrôler le bon fonctionnement du dispositif de détection de fuite, au travers de cette paroi et des couches du revêtement du conduit.

9. Conduit (10) de transport ou de stockage d'un fluide caloporteur, qui est équipé d'un dispositif de détection de fuite du fluide caloporteur qui est conforme à l'une quelconque des revendications 1 à 5, et qui comporte des premiers liens (14) servant à solidariser la couche de matériau (13) isolant à la paroi (11) du conduit, par cerclage par exemple.

10. Conduit selon la revendication 9 qui comporte des seconds liens (17) servant à solidariser la couche de matériau (16) conducteur fibreux au conduit revêtu du matériau (13) isolant, par cerclage par exemple.

11. Conduit selon la revendication 9 ou 10 dans lequel les premiers et/ou les seconds liens sont des liens filiformes ou en forme de cordelettes, qui sont essentiellement constitués de fibres d'un matériau électriquement isolant.

12. Procédé de revêtement d'un conduit (10) de transport ou de stockage d'un fluide caloporteur par un dispositif de détection de fuite du fluide caloporteur qui est conforme à l'une quelconque des revendications 1 à 5, dans lequel on solidarise la couche de matériau (13) isolant à la paroi (11) du conduit, par cerclage de cette couche par des premiers liens (14), et dans lequel on solidarise la couche de matériau (16) conducteur fibreux au conduit revêtu du matériau (13) isolant, par cerclage de la couche de matériau (16) conducteur par des seconds liens (17).

13. Procédé de contrôle du bon fonctionnement d'un dispositif de détection de fuite équipant un conduit et conforme à l'une quelconque des revendications 1 à 5, dans lequel on provoque un court circuit entre la paroi (11) du conduit et la couche de matériau (16) conducteur fibreux.

14. Procédé selon la revendication 13 dans lequel on introduit une pièce (22) électriquement conductrice au travers de la couche de matériau (16) conducteur et au travers de la couche de matériau (13) isolant, et on met en contact la pièce (22) avec la paroi conductrice (11) du conduit tout en maintenant cette pièce en contact avec la couche de matériau conducteur au travers de laquelle la pièce (22) s'étend, afin de réaliser le court-circuit et contrôler, par la mesure de l'impédance entre la paroi du conduit et la couche de matériau conducteur, le bon fonctionnement du système de détection de fuite, la pièce (22) électriquement conductrice étant de préférence métallique, en forme de tige ou d'aiguille.

15. Procédé selon l'une quelconque des revendications 12 à 14 qui est mis en oeuvre sur un conduit de transport de sodium sous pression ou sur un conteneur de stockage de sodium sous pression.

## Patentansprüche

1. Vorrichtung zur Detektion von Lecks eines Fluides, das in einer Leitung (10) gelagert oder befördert wird, die eine elektrisch leitende Außenwand (11) aufweist, die eine Schicht aus einem isolierenden Faserwerkstoff (13) aufweist, die die Leitung umgebend angeordnet ist, und die eine Schicht aus einem leitfähigen Werkstoff (16) aufweist, die an der Schicht aus isolierendem Werkstoff (13) verläuft, und eine Vorrichtung (23) zur Detektion von Kurzschlüssen oder zur Messung der Impedanz zwischen der Wand (11) der Leitung und der Schicht aus leitfähigem Werkstoff (16), **dadurch gekennzeichnet, dass** der leitfähige Werkstoff ein leitfähiger Faserwerkstoff ist, der im Wesentlichen aus einem Carbon- oder Graphitfilz besteht.

2. Vorrichtung nach Patentanspruch 1, in der der isolierende Werkstoff (13) Quarzfasern aufweist.

3. Vorrichtung nach irgendeinem der Patentansprüche 1 oder 2, die ein Kontaktteil (24) in geeigneter Form und Abmessungen aufweist, um mindestens teilweise in die leitfähige Faserschicht (16) eingesetzt oder eingesteckt zu werden, um die Schicht aus Faserwerkstoff (16) mit der Detektionsvorrichtung (23) elektrisch zu verbinden.

4. Vorrichtung nach Patentanspruch 3, in der das Kontaktteil (24) mindestens teilweise aus Graphit oder Kohlenstoff besteht.

5. Vorrichtung nach irgendeinem der Patentansprüche 1 oder 2, die ein Kontaktteil in Form einer Zange aufweist, deren Backen einen Teil der leitfähigen Faserschicht (16) einklemmen können.

6. Beschichtungsanordnung einer Leitung, die eine Detektionsvorrichtung nach irgendeinem der Patentansprüche 1 bis 5 aufweist und eine Schicht aus einem wärmeisolierenden Werkstoff (19), im Wesentlichen aus Fasern bestehend, die an der Schicht aus leitfähigem Faserwerkstoff (16) verläuft.

7. Anordnung nach Patentanspruch 6, die außerdem eine starre Wand (20) aufweist, die derart angeordnet ist, dass sie die (dritte) wärmeisolierende Schicht umgibt oder einhüllt.

8. Anordnung nach Patentanspruch 7, in der die starre Wand mit mindestens einer Öffnung (21) durchbohrt ist, die den Durchtritt eines Teils (22) erlaubt, das zur Prüfung der Funktionstüchtigkeit der Leckdetektionsvorrichtung durch diese Wand und die Beschichtungsschichten der Leitung hindurch dient.

9. Leitung (10) zur Beförderung oder Lagerung eines Kühlfluides, mit einer Leckdetektionsvorrichtung nach irgendeinem der Patentansprüche 1 bis 5 ausgestattet, die erste Bänder (14) aufweist, die zur Befestigung der Schicht aus isolierendem Werkstoff (13) an der Wand (11) der Leitung dienen, beispielsweise durch Umschnürung.

10. Leitung nach Patentanspruch 9, die zweite Bänder (17) aufweist, die zur Befestigung der Schicht aus leitfähigem Faserwerkstoff (16) an der mit dem isolierenden Werkstoff (13) beschichteten Leitung dienen, beispielsweise durch Umschnürung.

11. Leitung nach Patentanspruch 9 oder 10, in der die ersten und/oder die zweiten Bänder faden- oder schnurförmige Bänder sind, die im Wesentlichen aus Fasern eines elektrisch isolierenden Werkstoffes bestehen.

12. Verfahren zur Beschichtung einer Leitung (10) zur Beförderung oder Lagerung eines Kühlfluides mit einer Vorrichtung zur Detektion von Lecks des Kühlfluides nach irgendeinem der Patentansprüche 1 bis 5, in dem die Schicht aus isolierendem Werkstoff (13) an der Wand (11) der Leitung durch Umschnürung dieser Schicht mit ersten Bändern (14) befestigt wird und in dem die Schicht aus leitfahigem Faserwerkstoff (16) an der mit dem isolierenden Werkstoff (13) beschichteten Leitung durch Umschnürung der Schicht aus leitfähigem Faserwerkstoff (16) mit zweiten Bändern (17) befestigt wird.

13. Verfahren zur Prüfung der Funktionstüchtigkeit einer Vorrichtung zur Detektion von Lecks nach irgendeinem der Patentansprüche 1 bis 5, mit der eine Leitung ausgestattet ist, in dem ein Kurzschluss zwischen der Wand (11) der Leitung und der Schicht aus leitfähigem Faserwerkstoff (16)bewirkt wird.

14. Verfahren nach Patentanspruch 13, in dem ein elektrisch leitendes Teil (22) durch die Schicht aus leitfähigem Faserwerkstoff (16) und durch die Schicht aus isolierendem Werkstoff (13) eingeführt wird und das Teil (22) mit der leitfähigen Wand (11) der Leitung kontaktiert wird, wobei dieses Teil mit der Schicht aus leitfähigem Werkstoff, durch die das Teil (22) sich erstreckt, in Kontakt gehalten wird, um den Kurzschluss zu bewirken und durch Messung der Impedanz zwischen der Leitungswand und der Schicht aus leitfähigem Werkstoff die Funktionstüchtigkeit des Leckdetektionssystems zu prüfen, wobei das elektrisch leitende Teil (22) vorzugsweise aus Metall in Form einer Stange oder Nadel besteht.

15. Verfahren nach irgendeinem der Patentansprüche 12 bis 14, das an einer Leitung zur Beförderung von Natrium unter Druck oder einem Behälter zur Lagerung von Natrium unter Druck angewandt wird.

## Claims

1. A device for detecting a leak of a fluid that is stored or transported in a duct (10) having an electrically conductive outer wall (11), which comprises a layer of insulating fibrous material (13) arranged to surround the duct, and comprises a layer of conductive fibrous material (16) that extends against the layer of insulating material (13), and a detector appliance (23) for detecting a short circuit or measuring impedance between the wall (11) of the duct and the layer of conductive material (16), the device being **characterized in that** the conductive material is a conductive fibrous material essentially constituted by a carbon or graphite felt.

2. A device according to claim 1, wherein the insulating material (13) comprises silica fibers.

3. A device according to claim 1 or claim 2, the device including a contact element (24) of shape and dimensions adapted to be inserted or buried, at least in part, in the conductive fibrous layer (16) in order to connect the layer of fibrous material (16) electrically to the detector appliance (23).

4. A device according to claim 3, wherein the contact element (24) is made, at least in part, out of graphite or carbon.

5. A device according to claim 1 or claim 2, the device including a contact element in the form of a clamp having jaws capable of clamping onto a portion of the conductive fibrous layer (16).

6. A device for covering a duct that includes a detector device according to any one of claims 1 to 5 and a layer of thermally insulating material (19) essentially constituted by fibers that extends against the layer of conductive fibrous material (16).

7. A device according to claim 6, further including a rigid wall (20) arranged to surround or envelop the thermally insulating layer (third layer).

8. A device according to claim 7, wherein the rigid wall is pierced by at least one orifice (21) suitable for passing a tool (22) for checking proper operation of the leak detector device through said wall and the layers of the covering of the duct.

9. A duct (10) for transporting or storing a heat-transfer fluid, the duct being fitted with a device for detecting a leak of the heat-transfer fluid in accordance with any one of claims 1 to 5, the duct having first ties (14) serving to secure the layer of insulating material (13) to the wall (11) of the duct, e.g. by being strapped around it.

10. A duct according to claim 9 and having second ties (17) serving to secure the layer of conductive fibrous material (16) to the duct covered in the insulating material (13), e.g. by being strapped around it.

11. A duct according to claim 9 or claim 10, wherein the first and/or second ties are filamentary ties or in the form of cords and essentially constituted by fibers of electrically insulating material.

12. A method of covering a duct (10) for transporting or storing a heat-transfer fluid in a device that is for detecting a leak of the heat-transfer fluid and that is in accordance with any one of claims 1 to 5, wherein the layer of insulating material (13) is secured to the wall (11) of the duct by strapping first ties (14) around said layer, and wherein the layer of conductive fibrous material (16) is secured to the duct covered in the insulating material (13) by strapping second ties (17) around the layer of conductive material (16).

13. A method of checking proper operation of a leak detector device fitted to a duct and in accordance with any one of claims 1 to 5, wherein a short circuit is established between the wall (11) of the duct and the layer of conductive fibrous material (16).

14. A method according to claim 13 wherein an electrically conductive tool (22) is inserted through the layer of conductive material (16) and through the layer of insulating material (13), and the tool (22) is put into contact with the conductive wall (11) of the duct while keeping said tool in contact with the layer of conductive material through which the tool (22) extends, in order to establish the short circuit and check that the leak detector system is operating properly by measuring the impedance between the wall of the duct and the layer of conductive material, and wherein the electrically conductive tool (22) is preferably made of metal, in the form of a rod or a needle.

15. A method according to any one of claims 12 to 14, the method being performed on a duct for transporting sodium under pressure or on a container for storing sodium under pressure.
